# EUROPÄISCHE PATENTSCHRIFT

(11) **EP 2 853 782 B1**
(45) Veröffentlichungstag und Bekanntmachung des Hinweises auf die Patenterteilung: **13.07.2016**
(21) Anmeldenummer: 14185701.1
(22) Anmeldetag: 22.09.2014
(51) Int. Cl.: F16J 13/08, B65D 90/00, B65D 90/10, B65D 90/62

(54) **Schnellverschlussdeckel für einen Dom**
Quick fastening cover for a dome
Couvercle à fermeture rapide pour un dôme

(30) Priorität: 25.09.2013 DE 102013219233
(43) Veröffentlichungstag der Anmeldung: 01.04.2015
(73) Patentinhaber: Waggonbau Graaff GmbH, 31008 Elze (DE)
(72) Erfinder: Pana, Constantin, 31008 Elze (DE); Runkel, Gerhard-Holger, 31134 Hildesheim (DE)
(74) Vertreter: Lüdtke, Frank

(56) Entgegenhaltungen:
- EP-A1- 0 546 411
- WO-A1-2011/023906
- DE-C- 25 957
- FR-A1- 2 872 446
- US-A- 1 197 702
- US-A- 1 582 209
- US-A- 2 533 771
- US-A- 2 818 195
- US-A- 3 531 011

## Beschreibung

Die Erfindung betrifft einen Schnellverschlussdeckel für einen Dom entsprechend den Merkmalen des ersten Patentanspruches.

Die Erfindung ist überall dort einsetzbar, wo ein Tank vorhanden ist, der einen Dom aufweist, und dieser schnell und sicher geöffnet oder geschlossen werden muss. Unter einem Tank mit einem Dom kann ein Tank für einen Kesselwagen zu verstehen sein.

Behälter wie Tanks für Flüssigkeiten weisen eine Öffnung auf, durch die sie begangen werden können. Diese Öffnungen sind durch einen Deckel verschließbar. Der Deckel kann auf einfache Weise durch Schrauben und Muttern oder Schrauben in einem Gewinde des Behälters dicht mit dem Behälter verbunden sein. Ein Öffnen ist dann aufwendig, denn alle Schrauben sind mittels Schraubenschlüssel zu öffnen, bevor sich der Deckel öffnen lässt.

Daher wurden unterschiedliche Lösungen entwickelt, um den Deckel schneller und einfacher öffnen zu können.

DE 1 130 751 beschreibt einen Verschluss für einen Dom, wobei seitlich am Dom im Bereich einer Füllöffnung zwei sich gegenüberliegende Nocken schwenkbar gelagert sind. Die Nocken stehen über eine Zugstange miteinander in Wirkverbindung, wobei eine Seite der Zugstange an einem Nocken drehbar gelagert ist und das andere Ende der Zugstange über eine Mutter am anderen Nocken eingespannt werden kann. Dadurch werden beim Zudrehen der Mutter Zungen an den Nocken auf den Rand des Deckels gedrückt, so dass der Deckel auf die Füllöffnung gedrückt wird.

DE 1 224 662 beschreibt eine Verschlussvorrichtung, bei der ein Doppelhebel vorgesehen ist, der an einer Seite des Doms drehbar gelagert ist. An der anderen Seite des Hebels ist eine Halterung für ein Gewinde und ein von einem Handrad zu betätigendes Teil, das ebenfalls ein Gewinde aufweist, vorgesehen. Die beiden Gewinde sind auf eine Gewindeschraube aufgedreht, die nicht drehbar am Dom befestigt ist. Eine Drehung des Handrades verursacht somit eine lineare Bewegung der Halterung, beispielsweise nach unten, so dass der Doppelhebel auf einen Deckel des Doms gedrückt wird, der sich dadurch abdichtend an die Füllöffnung anlegt.

EP 0 260 436 beschreibt ein hydraulisch betätigtes Koppelgetriebe zum Verschließen eines Doms. Dabei sind am Dom mehrere Lenker sowie an einem Deckel des Doms eine mit den Lenkern verbundene Hebelstange angeordnet. Das Koppelgetriebe wird dabei durch ein z. B. hydraulisches Stellglied betätigt, wobei eine Betätigung zu einem Verschwenken der Hebelstange und somit des Deckels führt.

EP 0 617 688 beschreibt einen Verschluss für einen Druckbehälter, bei dem am Druckbehälter C-förmige Klammern drehbar aufgenommen sind. Die unteren Schenkel der C-förmigen Klammern sind dabei derartig am Druckbehälter gelagert, dass die C-förmigen Klammern nach dem Aufsetzen des Deckels so nach oben verdreht werden können, dass sie mit ihren oberen Schenkeln den Deckel am Rand umgreifen. In den oberen Schenkeln ist weiterhin eine Schraube eingedreht, die durch diese hindurch ragt und durch Eindrehen einen Druck auf den Deckel ausüben kann, so dass dieser gegen eine Dichtung am Druckbehälter gedrückt wird.

DE 1 953 085 beschreibt einen Verschluss eines Doms, bei dem eine Gewindeschraube mittig auf einem Deckel des Doms befestigt ist. In die Gewindeschraube ist ein Handrad mit einem Gewinde aufgeschraubt, wobei das Handrad mit zwei Hebeln derartig in Wirkverbindung steht, dass beim Verdrehen des Handrades durch die Hebel ein Druck auf den Deckel ausgeübt wird, so dass sich dieser dichtend auf die Öffnung des Doms anlegt.

DE 3 516 721 beschreibt einen Verschluss, bei dem der Deckel über eine Lagerung drehbar am Dom gelagert ist. Am Deckel sind mehrere Zwischenhebel angeordnet, die über Hebelverschlüsse betätigt werden können, so dass der Deckelrand an eine Dichtung an der Öffnung des Doms gedrückt wird.

Die obengenannten Lösungen sind aufgrund ihrer Bau- und Bedienweise kompliziert und störanfällig, wobei ein schnelles und einfaches Schließen und Öffnen des Deckels nicht immer möglich ist.

In WO.2011/023906 A1 ist ein mehreckiger Schnellverschlussdeckel für einen Dom mit einem Flansch auf einem Hals auf einem Tank beschrieben, wobei am Flansch ein Scharnier für einen Deckel angeordnet ist. Der Deckel weist eine drehbare Disk mit mehreren Armen auf, die in durch Drehen der Disk in Anschläge am Flansch ein- oder ausgeführt werden wobei die Disk an einem Zapfen mittig im Deckel angeordnet ist_{.} Ein planares drehbares Gewinde, mit dem Verschlussschieber von der Mitte des Deckels in Richtung auf einen Anschlag oder in umgekehrter Richtung geführt wird, offenbart das Dokument nicht. Die Arme der Disk rasten durch ihre kreisförmige Bewegung an der Unterseite eines mehreckigen Deckels in die Anschläge an Flansch ein. Da die Arme der Disk sich drehen weisen sie keine Führungen auf mit denen sie in Richtung auf die Anschläge zu führen sind. Bei einem runden Deckel wie sie an Kesselwagen oder andern Tanks vorkommen, ist diese Lösung nicht anwendbar_{.}

Ausgehend von diesem Stand der Technik ist es Aufgabe der Erfindung, eine Vorrichtung zum Verschließen und Öffnen eines runden Doms eines Behälters zu entwickeln, die schnell, sicher und einfach zu bedienen ist und den Behälter sicher verschließt.

Diese Aufgabe wird durch eine Vorrichtung nach den Merkmalen des ersten Patentanspruches gelöst.

Unteransprüche geben vorteilhafte Ausgestaltungen der Erfindung wieder.

Die erfindungsgemäße Lösung sieht einen Verschlussdeckel für einen Dom vor, der einen Schnellverschlussdeckel darstellt. Dieser weist einen Flansch auf dem Hals eines Tanks auf, wobei am Flansch ein Scharnier für den Deckel angeordnet ist.

Der Verschlussdeckel besteht aus einer drehbaren Disk mit einem planaren drehbaren Gewinde an einem Zapfen, der mittig im Deckel angeordnet ist.

Der Zapfen weist eine zylindrische Form auf und kann nach oben durch ein rundes Blech abgeschlossen sein. Der Zapfen ist mit dem Deckel fest verbunden, wozu sich eine Schweißverbindung eignet, d. h. der Zapfen kann mit dem Deckel verschweißt sein. Andere Arten einer Verbindung sind denkbar.

Unterhalb der Disk ist mindestens ein Verschlussschieber in einer Führung angeordnet. Der Verschlussschieber ist einteilig und im Wesentlichen gerade ausgeführt. Seine Führung entspricht dieser einteiligen und geraden Form und verläuft in Richtung vom Mittelpunkt des Verschlussdeckels zum Anschlag.
Vorteilhaft ist es, wenn die Führung eine T-Nut darstellt, in der der Verschlussschieber geführt wird. Möglich sind aber auch andere Formen wie eine viereckige, runde, ovale oder rechteckige Form. Weiterhin ist es vorteilhaft, an jedem Deckel vier Verschlussschieber anzuordnen. Denkbar sind aber auch Lösungen, bei denen in einem Deckel drei oder eine andere Anzahl von Verschlussschiebern vorgesehen sind.

Der Verschlussschieber ist von der Mitte des Deckels in Richtung auf den Anschlag und umgekehrt bewegbar und greift im verriegelten Zustand in einen Anschlag ein. Der Verschlussschieber weist eine oder mehrere Erhebungen auf, die in ein drehbares Gewinde der Disk eingreifen. Bei den Erhebungen kann es sich um Erhebungen in der Form von Zähnen handeln. Durch Drehen der Disk und das Eingreifen der Erhebungen des Verschlussschiebers in das Gewinde der Disk wird der Verschlussschieber in seiner Führung je nach Drehrichtung der Disk in Richtung auf den Mittelpunkt oder den Rand des Deckels verschoben. Um die Disk drehen zu können, sind an dieser Handgriffe angeordnet, durch die ein Bediener die Disk so lange drehen kann, bis der Verschlussschieber in die Anschläge einrastet, so dass der Deckel geschlossen ist oder aus diesen herausgezogen werden, so dass sich der Deckel öffnen lässt.

Um ein dichtes und festes Verschließen des Deckels herbeizuführen ist es vorteilhaft, wenn zwischen Verschlussschieber und Anschlag eine schiefe Ebene angeordnet ist. Eine günstige Ausführung sieht vor, dass jeder Verschlussschieber auf der dem Anschlag zugewandten Seite eine schiefe Ebene aufweist. Durch das Hineinschieben der schiefen Ebene in jeden der Anschläge wird der Deckel fest gegen den Hals des Tanks gepresst.

Vorteilhaft ist es weiterhin, wenn der Deckel von einem Ring umgeben ist, der eine auf seiner Unterseite umlaufende Nut aufweist, in der sich eine Dichtung befindet. Deckel und Ring können miteinander gasdicht verbunden sein, so dass Deckel und Ring mit der Dichtung den Dom gasdicht abschließen, wenn die festgezogenen Verschlussschieber gegen die Verriegelungen wirken.
Vorteilhaft ist es, vier Anschläge mit jeweils zwei Schrauben am Flansch zu befestigen. Weiterhin ist es vorteilhaft, wenn der Deckel einen Ring mit einer umlaufenden Nut mit einer Dichtung aufweist.

Weiterhin ist es vorteilhaft, die Disk mittels einer Scheibe und eines Federringes in einer Nut am Zapfen zu halten. Damit ist eine einfache Montage oder Demontage möglich.

Darüber hinaus ist es vorteilhaft, am Flansch einen Gegenflansch anzuordnen.

Flansch und Gegenflansch, der einen Teil des Tanks darstellt, sind mittels Schrauben- und. Mutterverbindung miteinander zu verbinden. Insgesamt können vorteilhafterweise zwölf Schrauben und zwölf Muttern für eine Verbindung vorgesehen werden.

Die erfindungsgemäße Lösung hat den Vorteil, dass ein Dom mit einem Verschlussdeckel schnell, zuverlässig und mit geringem Aufwand verschlossen werden kann.

Im Folgenden wird die Erfindung an einem Ausführungsbeispiel und drei Figuren näher erläutert. Die Figuren zeigen:
- Figur 1:: Schnellverschlussdeckel für einen Dom in Ansicht von oben
- Figur 2:: Schnitt A-A von Figur 1
- Figur 3:: Schnitt B-B von Figur 1.

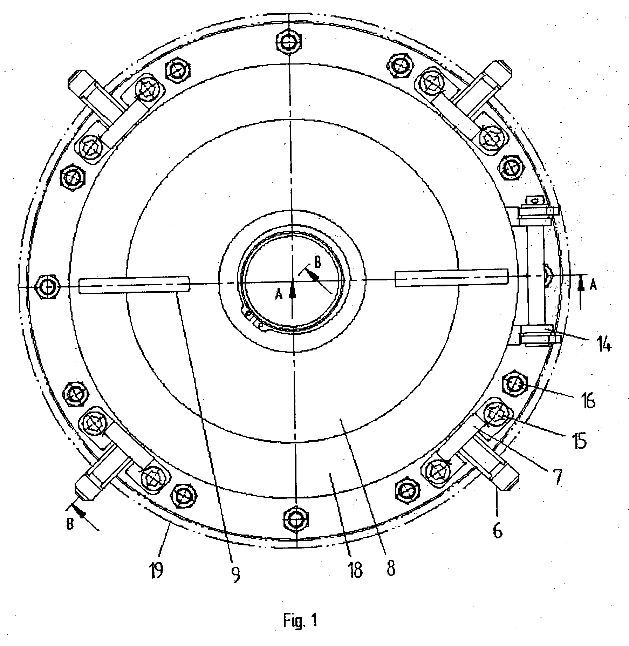

Die *Figur 1* zeigt einen Schnellverschlussdeckel in einer Ansicht von oben, bei dem zwei Handgriffe 9 für das Drehen der Disk 8 vorgesehen sind, was bewirkt, dass vier Verschlussschieber 6 sich in vier Anschläge 7 hinein bewegen, so dass der Deckel verschlossen und verriegelt ist. Die vier Anschläge 7 sind mittels Schrauben 15 am Flansch 1 festgeschraubt. Zwischen dem Flansch 1 und dem Deckel 5 sind Scharniere 14 angeordnet, um deren Achse der Deckel aufklappbar ist, nachdem die Verschlussschieber 6, durch Drehen der Disk 8 in die andere Richtung, aus den Anschlägen 7 entfernt wurden.

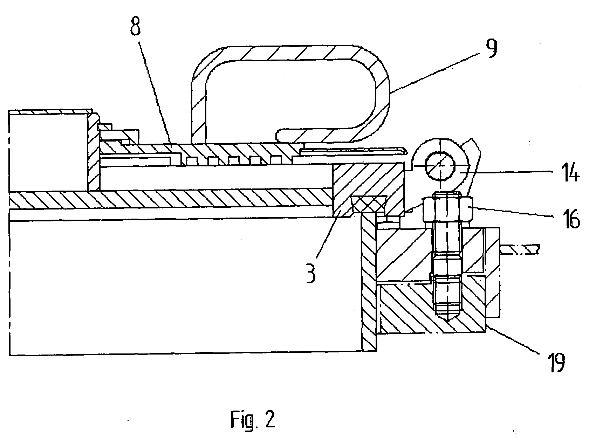

Der Flansch 1 ist am Tank 19 befestigt, wie das aus der *Figur 2* hervorgeht, wobei zum Befestigen Schraubenverbindungen 16 angeordnet sind. Insgesamt sind dazu zwölf Schraubenverbindungen 16 angeordnet.

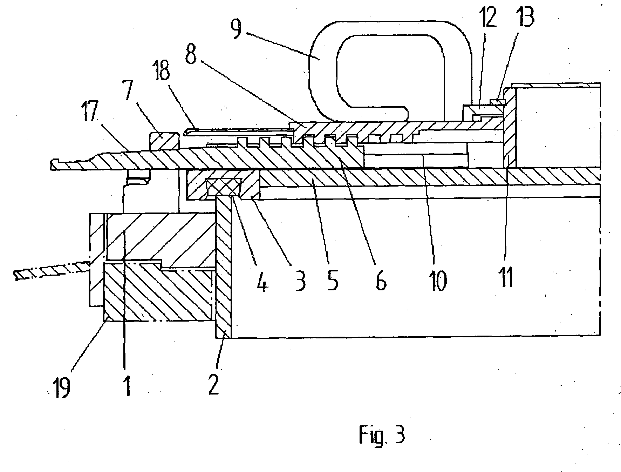

Die *Figur* 3 zeigt in einem Schnitt B-B von Figur 1 wie die Verschlussschieber 6 mit der Disk 8 zum Öffnen und Schließen des Deckels 5 zusammenwirken. Die Disk 8 wird über zwei Handgriffe 9 um den Zapfen 11 gedreht und an diesem mittels Federringes 13 und Scheibe 12 gehalten. Die Unterseite der Disk 8 weist Gewinderillen auf, in die Erhebungen der Verschlussschieber 6 eingreifen, so dass bei Drehen der Disk 8 in die eine oder die andere Richtung die Verschlussschieber 6 in ihrer Führung 10, die eine T-Nut darstellt, nach innen oder nach außen verschoben werden. Die Verschlussschieber 6 weisen an ihrem Ende eine schiefe Ebene 17 auf, mit der sie in den Anschlägen 7 festgezogen werden können, so dass der Ring 3 mit der Dichtung 4 gegen den Hals 2 festgezogen wird, so dass der Deckel 5 dicht gegen den Hals 2 am Flansch 1 festgezogen wird, so dass Dichtheit besteht. Der Hals 2 und der Flansch 1 sind mit Schraubverbindungen 16 mit dem Gegenflansch am Tank 19 verbunden. An der Disk 8 ist das Dach 18 angeordnet, das ein Blech darstellen kann und als Abdeckung auf den Erhebungen der Verschlussschieber 6 dient.

### Liste der verwendeten Bezugszeichen

- 1: Flansch
- 2: Hals
- 3: Ring mit Nut
- 4: Dichtung
- 5: Deckel
- 6: Verschlussschieber
- 7: Anschlag
- 8: Disk
- 9: Handgriff
- 10: Führung mit T-Nut
- 11: Zapfen
- 12: Scheibe
- 13: Federring
- 14: Scharnier
- 15: Schraube
- 16: Schraubverbindung
- 17: schiefe Ebene
- 18: Dach
- 19: Tank

## Patentansprüche

1. Schnellverschlussdeckel für einen Dom mit einem Flansch (1) auf einem Hals (2) an einem Tank (19), wobei am Flansch (1) ein Scharnier (14) für einen Deckel (5) angeordnet ist, bestehend aus
- einer drehbaren Disk (8) mit einem planaren drehbaren Gewinde an einem Zapfen (11), der mittig im Deckel (5) angeordnet ist,
- mindestens einem Verschlussschieber (6) in einer Führung (10), der im verriegelten Zustand in einen Anschlag (7) am Flansch (1) eingreift,
- einer oder mehreren Erhebungen am Verschlussschieber (6), die in das drehbare Gewinde der Disk (8) eingreifen,
- mindestens einem Handgriff (9) an der Disk (8) zum Drehen der Disk (8), wobei der Verschlussschieber (6) durch Drehen der Disk (8) in die Anschläge (7) ausoder eingeführt wird, **dadurch gekennzeichnet, dass**
- die Unterseite der Disk (8) Gewinderillen aufweist, die in Erhebungen des Verschlussschiebers (6 eingreifen, so dass beim Drehen der Disk (8) der Verschlussschieber (6) in einer Führung (10) ie nach Drehrichtung auf den Mittelpunkt oder den Rand des Deckels (5) und in den Anschlag (7) verschoben wird.

2. Vorrichtung nach Anspruch 1, **dadurch gekennzeichnet, dass** ein Ring (3) am Deckel (5) angeordnet ist, der gegen den Hals (2) wirkt.

3. Vorrichtung nach den Ansprüchen 1 und 2, dadurch gekenntzeichnet, dass der Verschlussschieber (6) an seiner dem Anschlag (7) zugewandten Seite eine schiefe Ebene (17) aufweist.

4. Vorrichtung nach einem der Ansprüche 1 bis 3, **dadurch gekennzeichnet, dass** vier Verschlussschieber (6) und vier Führungen (10) im Deckel (5) angeordnet sind.

5. Vorrichtung nach einem der Ansprüche 1 bis 4, **dadurch gekennzeichnet, dass** die Führung (10) eine T-Nut aufweist.

6. Vorrichtung nach einem der Ansprüche 1 bis 5, **dadurch gekennzeichnet, dass** jeder Anschlag (7) mit jeweils zwei Schrauben (15) am Flansch (1) befestigt ist.

7. Vorrichtung nach einem der Ansprüche 1 bis 6, **dadurch gekennzeichnet, dass** der Ring (3) in einer umlaufenden Nut eine Dichtung (4) aufweist.

8. Vorrichtung nach einem der Ansprüche 1 bis 7, **dadurch gekennzeichnet, dass** an der Disk (8) zwei Handgriffe (9) angeordnet sind.

9. Vorrichtung nach einem der Ansprüche 1 bis 8, **dadurch gekennzeichnet, dass** die Disk (8) mittels einer Scheibe (12) und eines Federringes (13) in einer Nut des Zapfens (11) gehalten wird.

10. Vorrichtung nach einem der Ansprüche 1 bis 9, **dadurch gekennzeichnet, dass** der Flansch (1) und ein Gegenflansch mittels Schrauben (16) und Mutterverbindung miteinander verbunden sind.

## Claims

1. Quick-closing cover for a dome having a flange (1) on a neck (2) on a tank (19), wherein a hinge (14) for a cover (5) is arranged on said flange (1) , said cover consisting of:
- a rotatable disc (8) having a planar rotatable thread on a shoulder (11) which is arranged centrally in the cover (5);
- at least one closing slide (6) in a guide (10), which slide engages, in the locked condition, in a stop (7) on the flange (1);
- one or more elevations on the closing slide (6) which engage in the rotatable thread of the disc (8) ;
- at least one handle (9) on the disc (8) for rotating said disc (8), wherein the closing slide (6) is conveyed out of, or into, the stops (7) by rotating the disc (8), **characterised in that**
- the underside of the disc (8) has thread grooves which engage in elevations on the closing slide (6) so that, when the disc (8) is rotated, the closing slide (6) is displaced, within a guide (10), towards the central point or towards the rim of the cover (5) and into the stop (7), depending on the direction of rotation.

2. Device according to Claim 1, **characterised in that** a ring (3) which acts against the neck (2) is arranged on the cover (5).

3. Device according to Claims 1 and 2, **characterised in that** the closing slide (6) has an inclined plane (17) on its side that faces towards the stop (7).

4. Device according to one of Claims 1 to 3, **characterised in that** four closing slides (6) and four guides (10) are arranged in the cover (5).

5. Device according to one of Claims 1 to 4, **characterised in that** the guide (10) has a T-groove.

6. Device according to one of Claims 1 to 5, **characterised in that** each stop (7) is fastened to the flange (1) by means of two screws (15) in each case.

7. Device according to one of Claims 1 to 6, **characterised in that** the ring (3) has a seal (4) in a circumferential groove.

8. Device according to one of Claims 1 to 7, **characterised in that** two handles (9) are arranged on the disc (8).

9. Device according to one of Claims 1 to 8, **characterised in that** the disc (8) is held in a groove in the shoulder (11) by means of a washer (12) and a spring ring (13).

10. Device according to one of Claims 1 to 9, **characterised in that** the flange (1) and a counter-flange are connected to each other by means of screws (16) and a nut connection.

## Revendications

1. Couvercle à fermeture rapide pour un dôme avec une bride (1) sur le col (2) d'un récipient (19), une charnière (14) pour un couvercle étant disposée sur la bride (1), couvercle de fermeture rapide constitué par
- un disque tournant (8) avec un filetage plan tournant sur un tenon (11) qui est disposé au centre du couvercle (5),
- au moins un coulisseau de fermeture (6) dans un dispositif de guidage (10) qui prend, en état verrouillé, dans une butée (7) sur la bride (1),
- une ou plusieurs protubérances sur le coulisseau de fermeture (6) qui prennent dans le filetage tournant du disque (8),
- au moins une poignée (9) sur le disque (8) pour tourner celui-ci, le coulisseau de fermeture étant engagé ou désengagé des butées (7) en tournant le disque (8), **caractérisé en ce que**
- la face inférieure du disque (8) présente des rainures de filetage qui prennent dans des protubérances du coulisseau de fermeture (6), de façon que le coulisseau de fermeture (6) soit déplacé, dans un dispositif de guidage (10), vers le centre ou vers le bord du couvercle (5) et dans la butée (7), lorsque et selon le sens, dans lequel le disque (8) est tourné.

2. Dispositif suivant la revendication 1, **caractérisé en ce qu'**un anneau (3) agissant à l'encontre du col (2) est disposé sur le couvercle.

3. Dispositif suivant les revendications 1 et 2, **caractérisé en ce que** le coulisseau de fermeture (6) présente un plan incliné (17) sur son côté tourné vers la butée (7).

4. Dispositif suivant une des revendications 1 à 3, **caractérisé en ce que** quatre coulisseaux de fermeture (6) et quatre dispositifs de guidage (10) sont disposés dans le couvercle (5).

5. Dispositif suivant une des revendications 1 à 4, **caractérisé en ce que** le dispositif de guidage (10) présente une rainure en T.

6. Dispositif suivant une des revendications 1 à 5, **caractérisé en ce que** chaque butée (7) est fixée au moyen de deux vis (15) respectivement sur la bride (1).

7. Dispositif suivant une des revendications 1 à 6, **caractérisé en ce que** l'anneau (3) présente un joint d'étanchéité (4) dans une rainure périphérique.

8. Dispositif suivant une quelconque des revendications 1 à 7, **caractérisé en ce que** deux poignées (9) sont disposées sur le disque (8).

9. Dispositif suivant une des revendications 1 à 8, **caractérisé en ce que** le disque (8) est tenu dans une rainure du tenon (11) au moyen d'une plaque (12) et d'un ressort annulaire.

10. Dispositif suivant une des revendications 1 à 9, **caractérisé en ce que** la bride (1) et une contre-bride sont reliées, l'une à l'autre, au moyen d'un assemblage par boulons (16) et écrous.
